# EUROPÄISCHE PATENTSCHRIFT

(11) **EP 2 901 373 B1**
(45) Veröffentlichungstag und Bekanntmachung des Hinweises auf die Patenterteilung: **27.06.2018**
(21) Anmeldenummer: 13771433.3
(22) Anmeldetag: 25.09.2013
(51) Int. Cl.: G06K 19/07, G06K 19/077

(54) **TRANSPORTIERBARE VORRICHTUNG MIT TRANSPONDER**
TRANSPORTABLE DEVICE COMPRISING A TRANSPONDER
DISPOSITIF TRANSPORTABLE DOTÉ D'UN TRANSPONDEUR

(30) Priorität: 28.09.2012 DE 102012217828
(43) Veröffentlichungstag der Anmeldung: 05.08.2015
(73) Patentinhaber: Hünnebeck GmbH, 40885 Ratingen (DE)
(72) Erfinder: KLEHR, Volker, 41748 Viersen (DE)
(74) Vertreter: Gille Hrabal
(86) Internationale Anmeldenummer: PCT/EP2013/069913
(87) Internationale Veröffentlichungsnummer: WO 2014/048954

(56) Entgegenhaltungen:
- DE-A1-102007 008 303
- DE-U1-202008 001 549

## Beschreibung

Die Erfindung betrifft eine transportierbare Vorrichtung mit einem Transponder eines RFID-Systems, der seine Energie über das zugehörige Lesegerät bezieht. Der Transponder ist in einer aus Metall bestehenden Vertiefung angeordnet. Die Erfindung betrifft insbesondere eine transportierbare Vorrichtung, die an Lagern und/ oder auf Baustellen im Zusammenhang mit der Errichtung von Bauten eingesetzt wird wie zum Beispiel ein Schalungselement, einen Transportbehälter oder eine Transporteinrichtung für Bauteile wie Ankerstäbe oder Arretiervorrichtungen oder anderes Schalungselementzubehör.

Eine Vorrichtung ist im Sinne der vorliegenden Erfindung transportierbar, wenn diese dazu bestimmt ist, für ihren Gebrauch transportiert zu werden. Eine Vorrichtung, die an unterschiedlichen Orten eingesetzt und daher transportiert werden soll und muss, ist transportierbar im Sinne der vorliegenden Erfindung. So wird beispielsweise ein Schalungselement nach einer Fertigstellung einer Wand oder Decke demontiert und zu einem neuen Einsatzort für die Herstellung einer weiteren Wand oder Decke transportiert. Daher ist ein Schalungselement transportierbar im Sinne der vorliegenden Erfindung.

Ein RFID-System gemäß der vorliegenden Erfindung besteht aus einem passiven Transponder, der eine im Speicher des Transponders abgespeicherte Information enthält oder enthalten kann, sowie einem Lesegerät für ein Auslesen der gespeicherten Information. Das Lesegerät versorgt außerdem den Transponder während des Auslesens mit Energie.

Ein Schalungselement umfasst auf der Vorderseite eine Schalhaut und auf der Rückseite aus Metall bestehende, die Schalhaut stützende Elemente wie Längsträger, Querriegel und Rahmen. Handelt es sich bei dem Schalungselement um eine Wandschalung, so gibt es Ankerstabbohrungen, die durch stützende Elemente und Schalhaut hindurchführen. Im aufgestellten Zustand einer Wandschalung erstrecken sich Längsträger in vertikaler Richtung und Querriegel in horizontaler Richtung.

Die beiden Seiten einer zu betonierenden Wand werden durch Wandschalungen begrenzt. Die Vorderseite einer jeden Wandschalung grenzt dann mit ihrer Schalhaut an den Beton an. Sich gegenüberliegende Wandschalungen werden durch Ankerstäbe nebst Arretiervorrichtungen gehalten. Ankerstäbe werden durch Ankerstabbohrungen hindurch gesteckt und an ihren Enden an den die jeweilige Schalhaut stützenden Elementen mittels Arretiervorrichtungen so befestigt, dass zumindest die beim Betonieren auf die Ankerstäbe wirkende Zugkraft aufgenommen wird.

Die Druckschrift WO 2008/098755 A1 offenbart ein Schalungselement mit einer Schalhaut und mit einem aus Metall bestehenden Außenrahmen. An dem Außenrahmen ist eine Vertiefung vorgesehen ist, die größer als ein flacher Transponder ist. Der Transponder ist in dieser Vertiefung angeordnet und gehalten.

Die vorgenannten, aus dem Stand der Technik bekannten Merkmale können einzeln oder in beliebiger Kombination mit dem nachfolgend beschriebenen erfindungsgemäßen Gegenstand kombiniert werden.

Die Druckschrift DE 20 2010 005 092 U1 beschreibt einen Gegenstand mit einer Vertiefung und einem Transponder in der Vertiefung. Die Vertiefung wird durch einen Behälter gebildet, der aus Metall oder Kunststoff besteht. Ein Transponder in einer Vertiefung eines Schalungselements ist aus der DE 10 2007 008 303 A1 bekannt.

Die Druckschrift DE 10 2010 038 474 A1 offenbart ein Schalungselement mit Schalungsrahmen und Schalungshaut. Ein RFID-Tag ist an der Rückseite der Schalhaut angebracht. Die Schalungshaut besteht aus Holz oder aus Kunststoff.

Aus der Druckschrift DE 103 57 695 A1 ist eine Schlitzantenne für einen Transponder bekannt. Die Druckschrift DE 20 2008 001 549 U1 offenbart einen Schlitz in der Antenne eines Transponders.

Die US 2006/0232412 A1 offenbart einen RFID-Chip sowie eine Schlitzantenne.
Es ist Aufgabe der Erfindung, eine Vorrichtung mit Transponder weiter zu entwickeln.

Die Aufgabe der Erfindung wird durch eine Vorrichtung mit den Merkmalen des Anspruchs 1 gelöst. Vorteilhafte Ausgestaltungen ergeben sich aus den Unteransprüchen.

Zur Lösung der Aufgabe wird eine zumindest teilweise aus Metall bestehende transportierbare Vorrichtung mit einem Transponder bereitgestellt, der in einer aus Metall bestehenden Vertiefung angeordnet ist. Im Unterschied zu dem aus der Druckschrift WO 2008/098755 A1 bekannten Stand der Technik gibt es auf der Rückseite des Transponders, also im Grund der Vertiefung einen Schlitz.

Ein Schlitz im Sinne der vorliegenden Erfindung ist eine längliche Öffnung am Grund der Vertiefung. Die Öffnung führt durch den Grund der Vertiefung hindurch.

Durch den Transponder können Informationen für ein Auslesen bereitgehalten werden, ohne dass der Transponder dafür über eine eigene Energiequelle verfügen müsste. Es hat sich darüber hinaus herausgestellt, dass die Auslesereichweite des Transponders durch Anordnung in einer Vertiefung mit Schlitz im Vergleich zum Stand der Technik erheblich vergrößert werden konnte. Unter Auslesereichweite des Transponders ist die Entfernung zu verstehen, die einzuhalten ist, um die im Transponder gespeicherte Information mit einem Transponder-Lesegerät auslesen zu können.

Es hat sich herausgestellt, dass bei einem Transponder die Auslesereichweite durch Vorsehen des Schlitzes in einem Beispielsfall von 10 cm auf 2 m bis 4 m vergrößert werden konnte. Durch die Vergrößerung der Reichweite kann erheblich einfacher ausgelesen werden. Die Nutzung eines Transponders zu Identifizierungszwecken und dergleichen bei einer anspruchsgemäßen Vorrichtung kann durch die Erfindung daher deutlich erweitert werden. Gerade im Zusammenhang mit Vorrichtungen, die auf Baustellen eingesetzt werden, ist eine Vergrößerung der Reichweite von besonderem Interesse.

Die Anordnung des Transponders in einer Vertiefung schützt den Transponder vor Beschädigungen. Darüber hinaus ist es auf technisch einfache Weise möglich, den Transponder verliersicher und geschützt an der Vorrichtung anzubringen.

In einer Ausgestaltung der Erfindung erstreckt sich der Schlitz über mehr als 80 % der Länge des Grunds der Vertiefung. So ist zum Beispiel der Grund der Vertiefung in einer vorteilhaften Ausgestaltung der Erfindung 140 mm bis 150 mm lang. Der Schlitz, der entlang des Grundes verläuft, ist dann wenigstens 1 1 2 mm bis 1 20 mm lang. Ein derart langer Schlitz trägt verbessert dazu bei, dass hohe Auslesereichweiten möglich sind.

In einer Ausgestaltung der Erfindung erstrecken sich die Antenne oder die Antennen des Transponders komplementär zum Schlitz. Die Antenne oder die Antennen verlaufen dann um einen Schlitz herum. Der Schlitz, um den die Antennen herum verlaufen, befindet sich dann oberhalb des Schlitzes, der am Grund der Vertiefung vorgesehen ist. Unterhalb der Antennen gibt es dann einen metallischen Untergrund. Dieser metallische Untergrund weist einen Schlitz auf, der mit dem jeweiligen Schlitz bei den Antennen korrespondiert. Es hat sich herausgestellt, dass sich so besonders hohe Auslesereichweiten erzielen lassen.

In einer Ausgestaltung der Erfindung beträgt die Breite des Schlitzes 20-50 %, vorteilhaft 30-40 % der Breite des Grundes der Vertiefung. Von dieser Dimensionierung kann jedoch ein mittlerer Bereich am Grund der Vertiefung ausgenommen sein. Diese Angabe bezieht sich daher in erster Linie auf in Bereiche entlang der Länge der Vertiefung. Hierdurch kann ein Transponder auf der einen Seite zuverlässig in der Vertiefung angebracht werden. Auf der anderen Seite genügt diese Breite, um hohe Auslesereichweiten zu ermöglichen.

In einer vorteilhaften Ausgestaltung der Erfindung gibt es im vorgenannten mittleren Bereich eine vorzugsweise kreisrunde Öffnung am Grund der Vertiefung mit einem Durchmesser größer als die Breite des Schlitzes. Oberhalb dieser Öffnung befindet sich dann der Chip des Transponders. Es hat sich gezeigt, dass so weiter verbessert große Auslesereichweiten ermöglicht werden können. Die Grundfläche der Öffnung ist aus diesem Grund vorzugsweise an die Grundfläche des Chips angepasst und vorzugsweise etwas größer. Weist der Chip also z. B. eine rechteckige Grundfläche auf, dann ist zu bevorzugen, dass auch die Öffnung eine solche rechteckige Grundfläche aufweist.

In einer vorteilhaften Ausführungsform der Erfindung ist der Transponder in einem metallischen Eckbereich der Vorrichtung angeordnet. Im Unterschied zu anderen Anordnungsmöglichkeiten ist ein Eckbereich in der Regel zugänglich, so dass die Möglichkeit des Auslesens verbessert sichergestellt ist.

Um in der Praxis in der Regel jederzeit auslesen zu können, ohne eine übermäßig große Vielzahl von Transpondern einsetzen zu müssen, sind zwei diagonal gegenüberliegende Ecken der Vorrichtung jeweils mit einem Transponder in einer Ausführungsform versehen. Es hat sich herausgestellt, dass diese Anordnung in nahezu sämtlichen Fällen ausreicht, um Auslesen zu können, ohne die Vorrichtung zuvor für ein Auslesen bewegen zu müssen.

Um die Möglichkeit des Auslesens weiter verbessert sicherzustellen, sind sämtliche metallischen Ecken der Vorrichtung mit einem Transponder versehen.

In einer Ausgestaltung der Erfindung wird der Transponder durch einen Klebstoff, insbesondere durch eine Vergussmasse, in der Vertiefung gehalten. Diese Anbringung bzw. Befestigung des Transponders ist auf technisch einfache Weise möglich. Klebstoff vermag ferner vor Verschmutzungen zu schützen.

In einer Ausgestaltung der Erfindung wird der Transponder in der Vertiefung alternativ oder ergänzend durch Formschluss gehalten. Auch diese Ausführungsform ermöglicht eine besonders einfache und zuverlässige Anbringung des Transponders an der Vorrichtung.

Das Auslesen des Transponders erfolgt wie aus der Druckschrift WO 2008/098755 A1 bekannt über die offene Seite der Vertiefung, also die vom Grund der Vertiefung gegenüberliegend angeordnete Seite. Diese offene Seite ist daher so angeordnet, dass diese zugänglich ist, um ein Auslesen des Transponders zu ermöglichen.

Die Form, Breite und Länge der offenen Seite entspricht bevorzugt der Form, Breite und der Länge des Grunds der Vertiefung.

In einer Ausgestaltung der Erfindung ist der Transponder in einem Außenrahmen eines Schalungselements angeordnet.

In einer Ausgestaltung der Erfindung wird der Außenrahmen durch ein geschlossenes Profil gebildet. Hierdurch wird vorteilhaft vermieden, dass Beton in das Profil gelangen kann, was das Auslesen des Transponders zumindest negativ beeinträchtigen könnte.

In einer Ausgestaltung der Erfindung befindet sich der Transponder derart in der Vertiefung, dass er an seiner der Außenseite zugewandten Seite mit Kunststoff- und/oder Vergussmasse abgedeckt oder überdeckt werden kann und ist. Insbesondere handelt es sich um einen Klebstoff, der der Abdeckung dient. Diese Abdeckung für den Transponders, also zum Beispiel die Vergussmasse, steht dann nicht gegenüber der an die Vertiefung angrenzenden Außenfläche hervor, also gegenüber der Oberkante der Vertiefung. Der Transponder wird durch diese Ausführungsform besonders gut geschützt.

In einer vorteilhaften Ausgestaltung der Erfindung ist die Oberfläche der Abdeckung, die der offenen Seite der Vertiefung zugewandt ist, gegenüber der an die Vertiefung angrenzenden Außenfläche zurückversetzt. Hierdurch ist der Transponder nebst Abdeckung weiter verbessert gegenüber nachteilhaften äußeren Einflüssen geschützt.

Ein bündiger Abschluss ist jedoch besonders zu bevorzugen, da es dann möglich ist, den Transponder besonders oberflächennah anzuordnen, was zu weiter verbesserten Auslesereichweiten führt.

In einer Ausgestaltung der Erfindung ist der Transponder in einer Kunststoffmasse eingebettet, also von allen Seiten mit der Kunststoffmasse umgeben. Der Transponder wird so weiter verbessert vor nachteilhaften äußeren Einflüssen geschützt.

In einer Ausgestaltung der Erfindung umfasst eine Ecke der Vorrichtung eine Mehrzahl von Transpondern, die sich in jeweils einer Vertiefung befinden. Die Transponder einer Ecke sind relativ zueinander so angeordnet, dass die Öffnungen der Vertiefungen in unterschiedliche Richtungen weisen. Diese Ausführungsform erleichtert weiter verbessert das Auslesen. Besonders vorteilhaft weißt daher eine jede Seite einer metallischen Ecke eine Vertiefung nebst Schlitz mit darin befindlichem Transponder auf. Eine jede Ecke umfasst grundsätzlich drei Seiten.

In einer Ausgestaltung der Erfindung ist Stahl oder Aluminium als Metall vorgesehen, welches die Vertiefung bildet.

In einer Ausgestaltung der Erfindung ist die Vertiefung wenigstens 2 mm tief. Diese Tiefe hat sich als ausreichend herausgestellt, um einen darin in eingebrachten Transponder zuverlässig vor nachteilhaften äußeren Einflüssen schützen zu können.

In einer Ausgestaltung der Erfindung ist die Vertiefung nicht mehr als 5 mm, vorzugsweise nicht mehr als 3 mm tief. Ein übermäßig großer Bauraum sowie Störungen aufgrund einer zu großen Tiefe werden so vermieden.

In einer vorteilhaften Ausgestaltung der Erfindung erstrecken sich Antennen des Transponders entlang einer geraden Linie, wobei ein Stück des Transponders zwischen den Antennen angeordnet ist und zwar vorzugsweise mittig. Ein symmetrischer Aufbau ist besonders zu bevorzugen. Ein derart aufgebauter Transponder ist besonders geeignet, um große Auslesereichweiten im Zusammenspiel mit der Vertiefung nebst Schlitz und ansonsten metallischen Untergrund zu ermöglichen.

Die Form des Grunds der Vertiefung ist vorzugsweise nur geringfügig größer im Vergleich zur Grundfläche des Transponders. Eine zuverlässige Anbringung des Transponders an der Vorrichtung wird so weiter verbessert sichergestellt, ohne dafür einen übermäßig großen Bauraum bereitstellen zu müssen.

Bevorzugt weist der Transponder zwei Antennen entlang einer geraden Linie auf, zwischen denen sich ein Chip befindet. Dieses Antennendesign trägt vorteilhaft zu großen Auslesereichweiten bei.

Vorteilhaft gibt es jeweils an dem Ende, welches entfernt von dem Chip liegt, zwei Arme, die vorzugsweise parallel zu einer in etwa rechteckigen Grundfläche einer jeden Antenne angeordnet sind. Diese Ausgestaltung trägt weiter verbessert zu großen Auslesereichweiten bei.

Große Auslesereichweiten können zwar auch dadurch erzielt werden, dass die Leistung des Lesegeräts entsprechend gesteigert wird. Dies scheitert jedoch Schutzbestimmungen, die zulässige Leistungen eines Lesegeräts begrenzen.

Eine Vertiefung nebst Schlitz mit einem darin befindlichen Transponder befindet sich insbesondere bei einer Ecke der Vorrichtung. Im Fall eines Schalungselements befindet sich die Vertiefung nebst Schlitz und Transponder vorzugsweise an einer Stirnseite benachbart bei einer Ecke eines aus Metall bestehenden Rahmens, um in der Praxis zuverlässig stets die darin gespeicherten Informationen auslesen zu können.

Bei RFID - Systemen wird auch in der Frequenz unterschieden. Der HF-Bereich 13.56 MHz ist primär für kurzreichweitige Systeme (Bezahlsysteme, Zutrittssysteme, Nearfield NFC) vorgesehen. Der UHF-Bereich 868 MHz (EU) dagegen eignet sich für deutlich größere Reichweiten. Bevorzugt wird daher ein RFID - System eingesetzt, welches aufgrund der entsprechenden sehr hohen Frequenz größere Reichweiten ermöglicht.

Es zeigen:
- Figur 1 :: Aufbau eines Transponders,
- Figur 2:: Vertiefung Aufsicht auf eine Vertiefung,
- Figur 3:: Aufsicht auf eine Vertiefung nebst einem darin befindlichem Transponder,

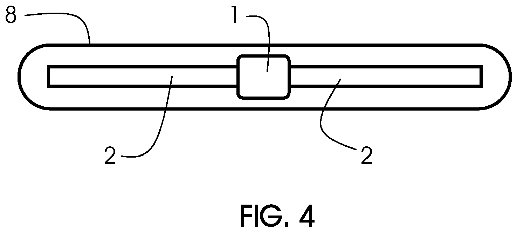

- Figur 4:: Aufbau eines Transponders.

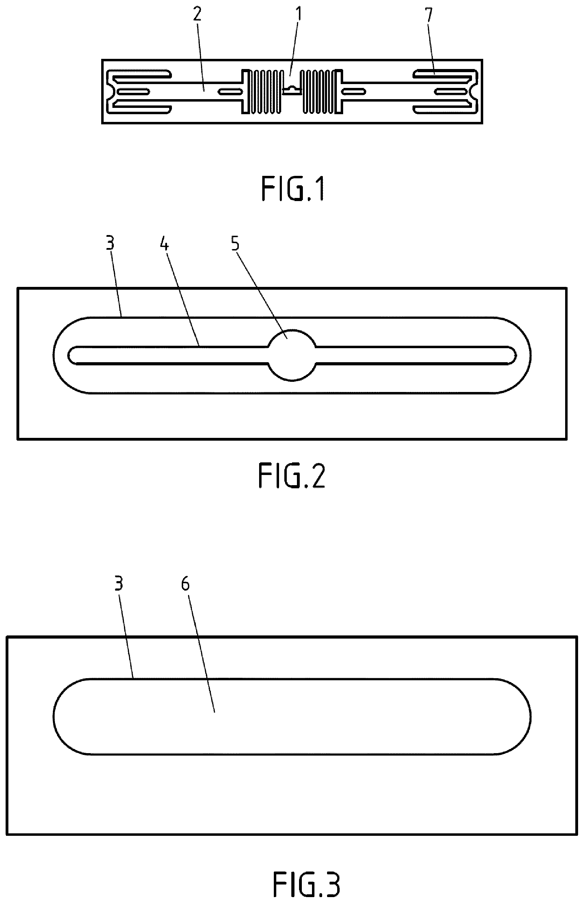

Die Figur 1 verdeutlicht einen ersten möglichen Aufbau eines Transponders mit einem Chip 1 und hiervon ausgehend jeweils einer Antenne 2, wobei die beiden Antennen 2 sich entlang einer geraden Linie erstrecken. Es ergibt sich so in etwa eine rechteckige Grundfläche des Transponders. Die Antennen 2 umfassen eine wesentlich rechteckige Grundfläche. An den Enden der rechteckigen Grundfläche, die von dem mittleren Bereich mit dem Chip 1 weggewandt sind, gibt es zu beiden Seiten Antennenarme 7, die parallel zur rechteckigen Grundfläche verlaufen.

Die Figur 2 zeigt eine Aufsicht auf eine Vertiefung 3, die durch ein Metallblech gebildet wird. Am Grund der Vertiefung 3 befindet sich ein Schlitz 4, der mittig eine kreisrunde Öffnung 5 aufweist. Der Grund der Vertiefung 3 ist 148 mm lang. Der Schlitz 4 ist 136 mm lang. Der Grund der Vertiefung 3 ist 22 mm breit. Der Schlitz 4 ist 8 mm breit. Die kreisrunde Öffnung 5 weist einen Durchmesser von 14 mm auf. Die Vertiefung ist 2,4 mm tief.

Die Figur 3 zeigt eine Aufsicht auf eine Vertiefung 3 mit einem darin befindlichen Transponder 6. Die Grundfläche des Transponders 6 entspricht der Grundfläche der Ausnehmung 3. Die Oberfläche des Transponders 6 ist gegenüber der Oberfläche, die an die Vertiefung 3 angrenzt, zurückversetzt. Auf diese Weise ist der Transponder 6 sehr zuverlässig gegenüber nachteilhaften äußeren Einflüssen geschützt. Um den Transponder weiter verbessert zu schützen, wird dieser darüber hinaus in einer Vergussmasse wie zum Beispiel einem Epoxidharz eingebettet.

Ein Transponder kann in einer Ausgestaltung einen Chip umfassen, der zwischen zwei Antennen angeordnet ist. Die beiden Antennen können sich entlang einer geraden Linie erstrecken und/oder jeweils um einen Schlitz herum verlaufen.

## Patentansprüche

1. Transportierbare Vorrichtung mit einem Transponder (6), der in einer aus Metall bestehenden Vertiefung (3) angeordnet ist, **dadurch gekennzeichnet, dass** der Grund der Vertiefung (3) mit einem Schlitz (4) versehen ist und der Transponder (6) einen Chip (1) umfasst, der zwischen zwei Antennen (2) angeordnet ist.

2. Vorrichtung nach dem vorhergehenden Anspruch, **dadurch gekennzeichnet, dass** unterhalb der Antennen (2) des Transponders (6) ein metallischer Untergrund vorhanden ist.

3. Vorrichtung nach einem der vorhergehenden Ansprüche, **dadurch gekennzeichnet dass** die Länge des Schlitzes (4) mehr als 80% der Länge des Grundes der Vertiefung (3) beträgt und/oder die Breite des Schlitzes (4) 20 bis 50% der Breite des Grunds der Vertiefung (3) beträgt und/oder der Schlitz (4) in einem mittleren Bereich eine vorzugsweise kreisrunde Öffnung (5) aufweist, die größer als die Breite des Schlitzes (4) ist.

4. Vorrichtung nach einem der vorhergehenden Ansprüche, **dadurch gekennzeichnet, dass** die Vertiefung (3) 2 bis 5 mm tief ist.

5. Vorrichtung nach einem der vorhergehenden Ansprüche, **dadurch gekennzeichnet, dass** der Transponder (6) in einem Eckbereich der Vorrichtung angeordnet ist.

6. Vorrichtung nach dem vorhergehenden Anspruch, **dadurch gekennzeichnet dass** sämtliche metallischen Eckbereiche der Vorrichtung mit ein oder mehreren, jeweils in metallischen Vertiefungen (3) nebst Schlitz (4) angeordneten Transpondern (6) versehen sind.

7. Vorrichtung nach einem der vorhergehenden Ansprüche, **dadurch gekennzeichnet, dass** der Transponder (6) in der Vertiefung (3) festgeklebt ist.

8. Vorrichtung nach einem der vorhergehenden Ansprüche, **dadurch gekennzeichnet, dass** der Transponder (6) in einer Kunststoffmasse eingebettet ist.

9. Vorrichtung nach dem vorhergehenden Anspruch, **dadurch gekennzeichnet, dass** die Oberfläche, die an die Vertiefung (3) angrenzt, gegenüber der Oberfläche der Kunststoffmasse und/ oder des Transponders (6) vorsteht oder bündig mit der Oberfläche der Kunststoffmasse abschließt.

10. Vorrichtung nach einem der vorhergehenden Ansprüche, **dadurch gekennzeichnet, dass** sich die beiden Antennen (2) entlang einer geraden Linie erstrecken und/oder jeweils um einen Schlitz herum verlaufen.

11. Vorrichtung nach einem der vorhergehenden Ansprüche, **dadurch gekennzeichnet, dass** die Vorrichtung ein Schalungselement oder eine Transporteinrichtung wie ein Stapelgestell oder ein Transportbehälter ist.

## Claims

1. A transportable device with a transponder (6) disposed in a depression (3) consisting of metal, **characterized in that** the bottom of the depression (3) is provided with a slit (4) and the transponder (6) comprises a chip (1) disposed between two antennas (2).

2. The device according to the preceding claim, **characterized in that** underneath the antennas (2) of the transponder (6), there is a metallic underground.

3. The device according to one of the preceding claims, **characterized in that** the length of the slit (4) is more than 80% of the length of the bottom of the depression (3) and/or the width of the slit (4) is 20 to 50 % of the width of the bottom of the depression (3) and/or the slit (4) has in a central region a preferably circular opening (5) which is larger than the width of the slit (4).

4. The device according to one of the preceding claims, **characterized in that** the depression (3) has a depth of 2 to 5 mm.

5. The device according to one of the preceding claims, **characterized in that** the transponder (6) is disposed in a corner region of the device.

6. The device according to the preceding claim, **characterized in that** all of the metallic corner regions of the device are provided with one or more transponders (6) each disposed in metallic depressions (3) with a slit (4).

7. The device according to one of the preceding claims, **characterized in that** the transponder (6) is firmly glued into the depression (3).

8. The device according to one of the preceding claims, **characterized in that** the transponder (6) is embedded into a plastic mass.

9. The device according to the preceding claim, **characterized in that** the surface adjacent to the depression (3) protrudes over the surface of the plastic mass and/or of the transponder (6) or ends flush with the surface of the plastic mass.

10. The device according to one of the preceding claims, **characterized in that** the two antennas (2) extend along a straight line and/or respectively extend around a slit.

11. The device according to one of the preceding claims, **characterized in that** the device is a formwork element or a transport device like a stacking frame or a transport container.

## Revendications

1. Dispositif transportable comprenant un transpondeur (6), qui est disposé dans une cavité (3) réalisée en métal, **caractérisé en ce que** le fond de la cavité (3) est muni d'une fente (4) et le transpondeur (6) comprend une puce (1), qui est disposée entre deux antennes (2).

2. Dispositif selon la revendication précédente, **caractérisée en ce qu'**il y a un fond métallique au-dessous des antennes (2) du transpondeur (6).

3. Dispositif selon l'une des revendications précédentes, **caractérisé en ce que** la longueur de la fente (4) est plus de 80 % de la longueur de la cavité (3) et/ou la largeur de la fente (4) est 20 à 50 % de la largeur du fond de la cavité (3) et/ou la fente (4) comprend une ouverture (5) de préférence circulaire dans une partie centrale, laquelle ouverture est plus grande que la largeur de la fente (4).

4. Dispositif selon l'une des revendications précédentes, **caractérisé en ce que** la cavité (2) comprend une profondeur comprise entre 2 et 5 mm.

5. Dispositif selon l'une des revendications précédentes, **caractérisé en ce que** le transpondeur (6) est disposé dans une zone de coin du dispositif.

6. Dispositif selon l'une des revendications précédentes, **caractérisé en ce que** toutes les zones de coin métalliques du dispositif sont munies d'un ou de plusieurs transpondeurs (6) disposés chacun dans des cavités métalliques (3) ayant des fentes (4).

7. Dispositif selon l'une des revendications précédentes, **caractérisé en ce que** le transpondeur (4) est collé dans la cavité (3).

8. Dispositif selon l'une des revendications précédentes, **caractérisé en ce que** le transpondeur (6) est incorporé dans une masse plastique.

9. Dispositif selon la revendication précédente, **caractérisé en ce que** la surface, qui est adjacente à la cavité (3), fait saillie par rapport à la surface de la masse plastique et/ou du transpondeur (6) ou affleure avec la surface de la masse plastique.

10. Dispositif selon l'une des revendications précédentes, **caractérisé en ce que** les deux antennes (2) s'étendent le long d'une ligne droite et/ou s'étendent chacune autour d'une fente.

11. Dispositif selon l'une des revendications précédentes, **caractérisé en ce que** le dispositif est un élément de coffrage ou un dispositif de transport tel qu'une armature empilable ou un conteneur de transport.
